# EUROPEAN PATENT APPLICATION

(11) **EP 4 391 660 A1**
(43) Date of publication of application: **26.06.2024**
(21) Application number: 23218105.7
(22) Date of filing: 19.12.2023
(51) Int. Cl.: H04W 52/14, H04L 1/00, H04L 5/00, H04W 24/10, H04W 52/32

(54) **CHANNEL STATE INFORMATION REPORTING FOR MULTIPLE POWER OFFSETS**

(30) Priority: 22.12.2022 US 202263434616 P; 22.11.2023 US 202318517451
(71) Applicant: Samsung Electronics Co., Ltd., Suwon-si, Gyeonggi-do 16677 (KR)
(72) Inventor: HU, Liang, San Jose, CA, 95134 (US); SARTORI, Philippe Jean Marc Michel, San Jose, CA, 95134 (US)
(74) Representative: Kuhnen & Wacker Patent- und Rechtsanwaltsbüro PartG mbB

(57) **Abstract**

A system and a method are disclosed for enhanced cannel state information, CSI, reporting is described herein. According to some embodiments, a user equipment, UE, (100) generates CSI measurements based on each of a plurality of power offsets. The UE (100) transmits the CSI measurements in a CSI report to a base station, gNB, (150). The UE receives, from the gNB (150), an indication of a channel state corresponding to a particular power offset of the plurality of offsets. Based on the indication of the channel state, the UE (100) uses one or more particular resources to receive a physical data shared channel, PDSCH.

## Description

### TECHNICAL FIELD

The disclosure generally relates to wireless communication systems. More particularly, the subject matter disclosed herein relates to improvements to channel state information (CSI) reporting for dynamic power adjustment.

### SUMMARY

The following is a list of acronyms used in this disclosure and their respective definitions:

| Abbreviation | Definition |
|---|---|
| MIMO | Multiple Input Multiple Output |
| CSI-RS | Channel State Information - Reference Signal |
| NZP CSI-RS | Non-Zero-Power Channel State Information - Reference Signal |
| RI | Rank Indictor |
| PMI | Precoding Matrix Indicator |
| CQI | Channel Quality Information |
| TRS | Tracking Reference Signal |
| BWP | Bandwidth Parts |
| RRM | Radio Resource Management |
| TCI | Transmission Configuration Indication |
| DCI | Downlink Control Information |
| DMRS | Demodulation Reference Signal |
| BFR | Beam Failure Recovery |
| RSRP | Reference Signals Received Power |
| RSRQ | Reference Signal Received Quality |
| RSSI | Received Signal Strength Indicator |
| SSB | Synchronization Signal Block |
| WUS | Wake Up Signal |
| RLM | Radio Link Monitoring |
| NES | Network Energy Saving |
| PDSCH | Physical Downlink Shared Channel |
| EPRE | Energy per resource element |

With increasing demand for data in cellular systems, power consumption of the network has been steadily increasing, with the power consumption dominating operational expenses for deployed networks. Given the increased network costs, the 3^{rd} Generation Partnership Project (3GPP) has begun investigating how to reduce power consumption at the network side.

Currently the DL transmission power is typically fixed by the gNB for all UEs in a cell irrespectively of their position in the cell. For UEs in cell center, the SINR that UE experience is typically higher than needed, e.g., if the MCS selected is the highest. For such scenarios, it is useful in terms of energy consumption to reduce the gNB transmission power specifically for the UEs in good coverage as even a lower SINR would not affect UE perceived performance. Such reduction would however mean that the transmission power of e.g. PDSCH would change dynamically according to UE channel quality.

One issue with changing PDSCH power levels dynamically is that currently the power offset between PDSCH and CSI-RS is notified to UE via RRC signaling. Thus, with the current standards specifications, when the PDSCH transmission power changes, the CSI-RS power must change accordingly to keep the power offset as indicated. However, the CSI-RS can be shared/used with by multiple UEs. Thus, all the PDSCH powers of these users are simultaneously changed.

Changing all the PDSCH powers simultaneously is not a good option since UEs at the edge of the cells need higher power to maintain acceptable SINR. Thus, it is necessary to have mechanisms to enable the gNB to dynamically change the PDSCH power without affecting CSI-RS transmission.

Modifying power offset between PDSCH and CSI-has impact on CSI feedback from UE. This is because the CSI feedback that UE reports is based on the channel it estimates from CSI-RS and the configured power offset between CSI-RS and PDSCH. CSI feedback includes not only CQI, L1-RSRP, but also RI and PMI. Inaccurate power offset results in inaccurate CSI feedback. Note that it is not possible to have the gNB making some compensation even it knows the power offset between CSI-RS and PDSCH changes as gNB does not know the channel information.

To overcome these issues, enhancements for CSI reporting/feedback are provided herein. A UE prepares CSI measurements for each of a plurality of power offsets which can be provided to the gNB. In some embodiments, the CSI measurements are provided in a single CSI report. This reporting allows for dynamic power adaptation on RS or PDSCH. Options for reporting are described below:

Option 1 enables dynamic power adjustment of SSB, CSI-RS and PDSCH. All the transmission powers of SSB, RS and PDSCH are dynamically adapted. The power saving effect is high while the cell discovery performance is low as the SSB power is reduced (which is okay for some scenarios, e.g., if the cell to discover is small). Furthermore, enhancements of RRM measurement and CSI report may be considered to indicate the power change of SSB and CSI-RS.

Option 2 enables dynamic power adjustment of CSI-RS and PDSCH. Since the SSB power is not dynamically changed, the cell discovery performance can be ensured. Enhancements of RRM measurements related to CSI-RS and CSI reporting may be considered as well.

Option 3 enables dynamic power adjustment of PDSCH only. This option has the smallest specification impact. Enhancements of CSI measurement and reporting may be considered as the actual transmission power of PDSCH is different from that of CSI-RS.

In an embodiment, a method comprises generating channel state information (CSI) measurements at a user equipment (UE) based on each of a plurality of power offsets; transmitting the CSI measurements in a CSI report from the UE to a base station (gNB); receiving, from the gNB, an indication of a channel state corresponding to a particular power offset of the plurality of offsets; based on the indication of the channel state, using one or more particular resources to receive a physical data shared channel (PDSCH).

In some embodiments, the indication of the channel state is received in a message sent to a plurality of different UEs including the UE.

In some embodiments, the plurality of power offsets comprises power offsets between a CSI reference signal (CSI-RS) and PDSCH.

In some embodiments, the plurality of power offsets comprises power offsets between a synchronization signal block (SSB) and a CSI reference signal (CSI-RS). In some embodiments where the plurality of power offsets comprises power offsets between the SSB and CSI-RS, the method further comprises: receiving, from the gNB, data indicating a change in an offset between the SSB and the CSI-RS; and performing the generating CSI measurements in response to receiving the data from the gNB indicating the change in the offset between the SSB and the CSI-RS.

In some embodiments, the method further comprises receiving, at the UE, from the gNB, data identifying the plurality of power offsets; and performing the generating CSI measurements in response to receiving the data identifying the plurality of power offsets; wherein the data identifying the plurality of power offsets is received through a first downlink control information (DCI) message and the indication of the channel state corresponding to the particular power offset is received through a second DCI message. In some embodiments, the UE is pre-configured with the plurality of power offsets and the data identifying the plurality of power offsets comprises a selection of the plurality of power offsets.

In some embodiments, the method further comprises: determining that one or more pre-configured conditions have been satisfied; and performing the generating CSI measurements based on each of the plurality of power offsets in response to determining that the one or more pre-configured conditions have been satisfied. In some embodiments, the one or more pre-configured conditions comprises a throughput based on an existing CSI-RS resource configuration with an existing power offset between CSI-RS and PDSCH falling below a threshold value. In some embodiments, the one or more pre-configured conditions comprises an SINR falling below a threshold value.

In some embodiments, the one or more particular resources used to receive the PDSCH comprises a frequency domain, a time domain, or a power domain physical resource scheduled by the gNB.

In an embodiment, a system comprises one or more processors; a memory storing instructions which, when executed by the one or more processors, cause performance of: generating channel state information (CSI) measurements at a user equipment (UE) based on each of a plurality of power offsets; transmitting the CSI measurements in a CSI report from the UE to a base station (gNB); receiving, from the gNB, an indication of a channel state corresponding to a particular power offset of the plurality of offsets; based on the indication of the channel state, using one or more particular resources to receive a physical data shared channel (PDSCH).

In some embodiments, the indication of the channel state is received in a message sent to a plurality of different UEs including the UE.

In some embodiments, the plurality of power offsets comprises power offsets between a CSI reference signal (CSI-RS) and PDSCH.

In some embodiments, the plurality of power offsets comprises power offsets between a synchronization signal block (SSB) and a CSI reference signal (CSI-RS). In some embodiments where the plurality of power offsets comprises power offsets between the SSB and CSI-RS, the instructions, when executed by the one or more processors, further cause performance of: receiving, from the gNB, data indicating a change in an offset between the SSB and the CSI-RS; and performing the generating CSI measurements in response to receiving the data from the gNB indicating the change in the offset between the SSB and the CSI-RS.

In some embodiments, the instructions, when executed by the one or more processors, further cause performance of receiving, at the UE, from the gNB, data identifying the plurality of power offsets; and performing the generating CSI measurements in response to receiving the data identifying the plurality of power offsets; wherein the data identifying the plurality of power offsets is received through a first downlink control information (DCI) message and the indication of the channel state corresponding to the particular power offset is received through a second DCI message. In some embodiments, the UE is pre-configured with the plurality of power offsets and the data identifying the plurality of power offsets comprises a selection of the plurality of power offsets.

In some embodiments, the instructions, when executed by the one or more processors, further cause performance of: determining that one or more pre-configured conditions have been satisfied; and performing the generating CSI measurements based on each of the plurality of power offsets in response to determining that the one or more pre-configured conditions have been satisfied. In some embodiments, the one or more pre-configured conditions comprises a throughput based on an existing CSI-RS resource configuration with an existing power offset between CSI-RS and PDSCH falling below a threshold value. In some embodiments, the one or more pre-configured conditions comprises an SINR falling below a threshold value.

In some embodiments, the one or more particular resources used to receive the PDSCH comprises a frequency domain, a time domain, or a power domain physical resource scheduled by the gNB.

### BRIEF DESCRIPTION OF THE DRAWING

In the following section, the aspects of the subject matter disclosed herein will be described with reference to exemplary embodiments illustrated in the figures, in which:
FIG. 1 is a diagram illustrating a communication system, according to an embodiment.
FIG. 2 depicts an example method of a CSI reporting/feedback procedure.
FIG. 3 depicts an example of a power adaption scheme for reducing transmission power according to some embodiments.
FIG. 4 depicts an example of a power adaption scheme for increasing signal quality according to some embodiments.
FIG. 5 depicts an example of a power adaption scheme for reducing transmission power and increasing signal quality according to some embodiments.
FIG.6 is a block diagram of an electronic device in a network environment, according to an embodiment.
FIG. 7 shows a system including a UE and a gNB in communication with each other.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

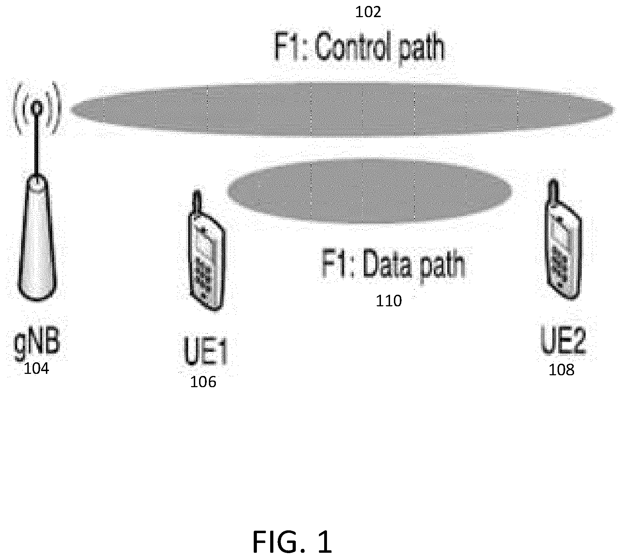

FIG. 1 is a diagram illustrating a communication system, according to an embodiment. In the architecture illustrated in FIG. 1, a control path 102 enables the transmission of control information through a network established between a gNB 104, a first UE 106, and a second UE 108. A data path 110 enables the transmission of data (and some control information) on an SL between the first UE 106 and the second UE 108. The control path 102 and the data path may be on the same frequency or may be on different frequencies.

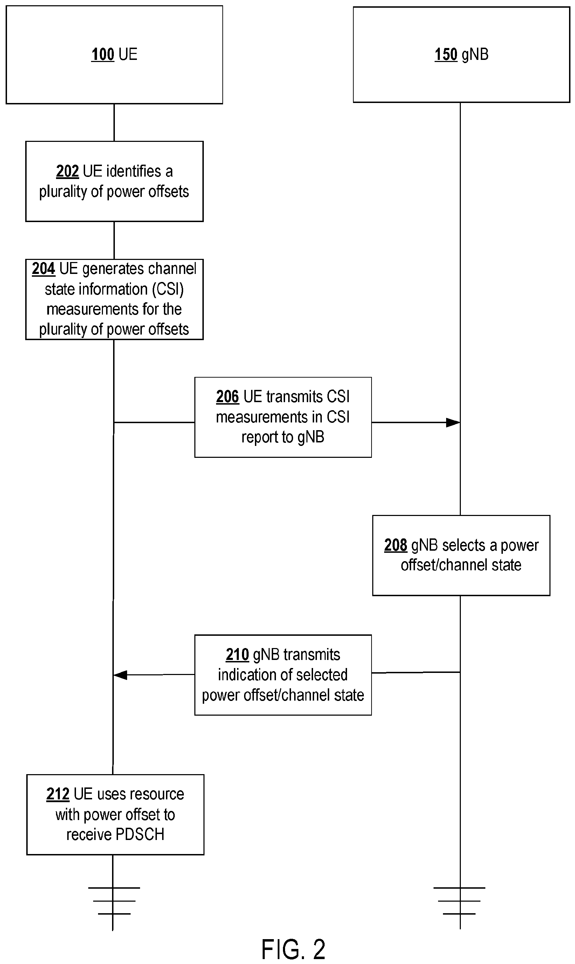

FIG. 2 depicts an example method of a CSI reporting/feedback procedure. At step 202, a UE identifies a plurality of power offsets. In some embodiments, the plurality of power offsets comprise different power offsets between a PDSCH and CSI-RS. Additionally or alternatively, the power offset may comprise a power offset between a CSI-RS and an SSB.

In some embodiments, the plurality of power offsets are determined based on a request from the gNB for feedback identifying channel states for a plurality of power offsets. In some embodiments, the request from the gNB may comprise an indication of a change of SSB and/or CSI. In some embodiments, the request from the gNB may identify the plurality of power offsets, through direct identification of values and/or identification of one or more pre-configured power offsets for the UE. For instance, a UE may be pre-configured via RRC with a set of values for ***powerControlOffset.*** The values may be configured as a ratio of PDSCH EPRE to NZP CSI-RS EPRE. The gNB may use MAC-CE and/or DCI to indicate to UE(s) which power offset to be used for CSI measurement. The indication may be sent by the gNB using group-common or cell-common signaling when the indication is being sent to multiple UEs, such as in response to detecting a change in SSB and CSI-RS offset that impacts multiple UEs.

An example of a CSI-RS resource dynamic power adjustment of the PDSCH is provided below: 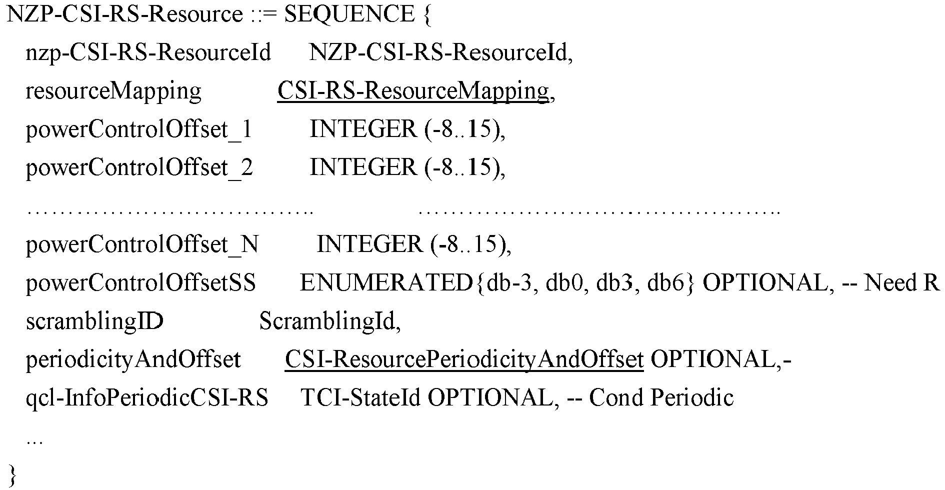 An example of a CSI-RS resource for dynamic power adjustment of the PDSCH and CSI-RS is provided below: 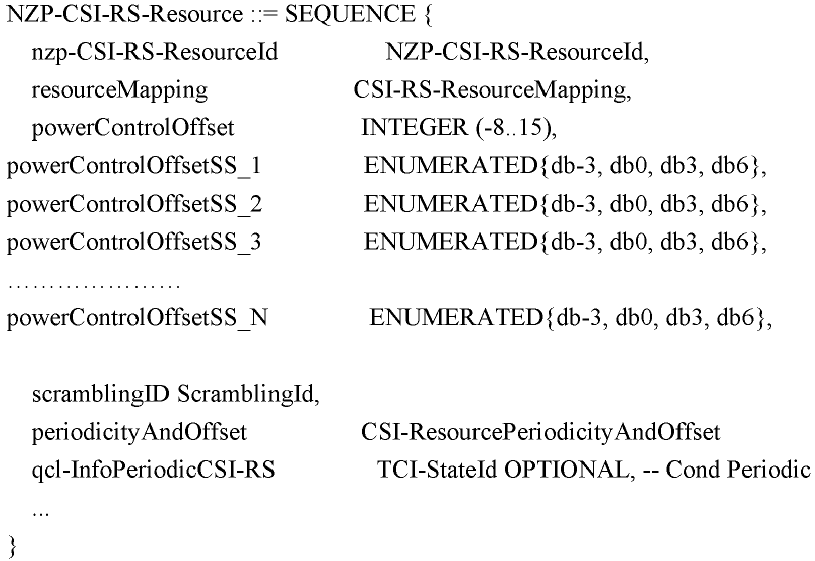 For PDCCH, when the UE monitors PDCCHs for a DCI format 1_0 with CRC scrambled by SI-RNTI, P-RNTI, or RA-RNTI, if the UE has not been provided dedicated higher layer parameters, the UE may assume that the ratio of PDCCH DMRS EPRE to SSS EPRE is within -8 dB and 8 dB. For link recovery, the ratio of the PDCCH EPRE to NZP CSI-RS EPRE may be assumed as 0 dB. For the other cases, the EPRE of PDCCH and PDCCH DMRS may depend on the number of scheduled PRBs over the operating BW based on gNB implementation.

In some embodiments, the UE determines the plurality of power offsets in response to determining that one or more pre-configured conditions are satisfied. For example, the UE may determine the plurality of power offsets in response to determining that a SINR and/or throughput based on an existing CSI-RS resource configuration with an existing power offset between the CSI-RS and PDSCH fell below a first threshold value and/or below a second threshold value. The first threshold may be configured so that the gNB can increase the power of the PDSCH transmission and the UE throughput in response the throughput or SINR being too low. The second threshold may be configured so that the gNB can decrease the power of the PDSCH transmission in order to save energy in response to the throughput and/or SINR being higher than needed.

At step 204, the UE generates CSI measurements for the plurality of power offsets. For example, the UE may generate measurements of any of RSRP, RSRQ, SINR, PMI, CQI, or RI for each of the plurality of power offsets. The CSI measurements that are transmitted to the gNB may include any combination of RSRP, RSRQ, SINR, PMI, CQI, or RI and, in some instances the UE may generate measurements of any of the above in addition to the CSI measurements that are transmitted to the gNB.

At step 206, the UE transmits the CSI measurements in a CSI report to the gNB. In some embodiments, the UE transmits the CSI measurements in a single CSI report where each CSI result corresponds to one of the power offsets. In some embodiments, the CSI report includes the RI, PMI, and CQI for each of the power offsets, thereby allowing the gNB decide on which power offset should be activated. In other embodiments, the UE reports a measured RSRP, RSRQ, and/or SINR on the 1 or 2 ports CSI-RS resource for each of the power offsets. Additionally or alternatively, the UE may report a measured product of a rank indicator, number of bits per modulated symbol, and coding rate.

At step 208, the gNB selects a power offset. For example, the gNB may select a power offset that achieve specific pre-configured CSI measurements, such as a maximum SINR. In embodiments where a threshold is used to trigger the UE to measure the CSI for the plurality of power offsets, the gNB may select a power offset that causes the threshold to no longer be exceed. In some embodiments, selecting the power offset comprises selecting a channel state that corresponds to the power offset. For example, if the UE does not specify power offset but instead sends a grouping of measurements and the gNB selects one of the groupings of measurements, the selection of the grouping comprises a selection of the power offset corresponding to the measurements.

At step 210, the gNB transmits an indication of a selected power offset and/or channel state. The gNB may transmit the selection directly to the UE and/or to a plurality of UEs through group-common or cell-common signaling. If group common signaling is used, a group may be defined using existing RRC procedures for DCI format 2_X.

At step 212, the UE uses a resource with the selected power offset and/or channel state. For example, the UE may select a resource using the selected power offset for receiving a future transmission, such as a PDSCH transmission. The resource may comprise a frequency domain, time domain, or power domain physical resource scheduled by the gNB.

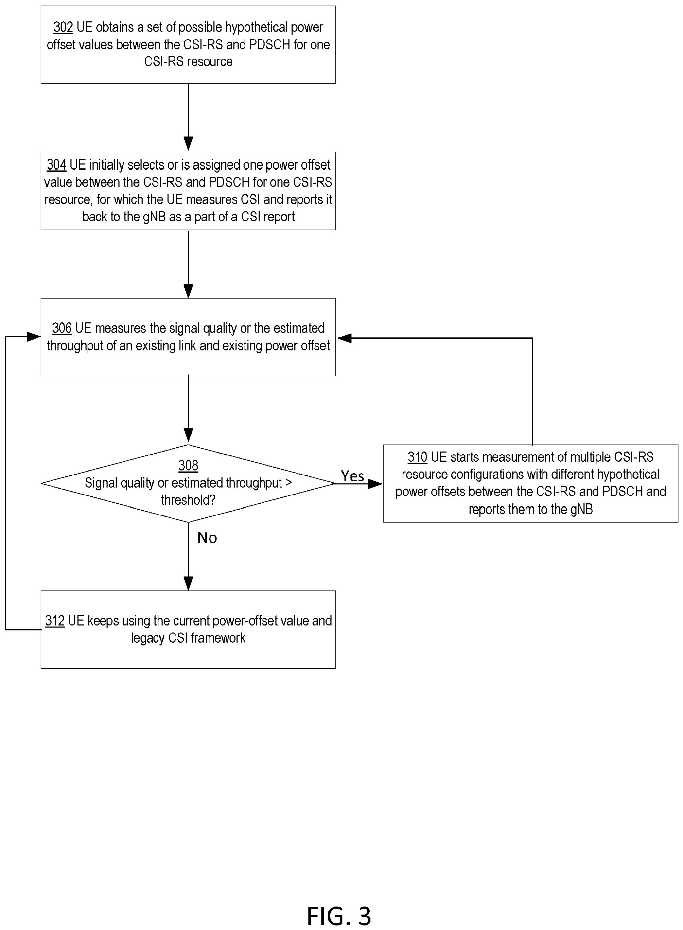

FIG. 3 depicts an example of a power adaption scheme for reducing transmission power according to some embodiments. At step 302, a UE obtains a set of possible hypothetical power offset values between the CSI-RS and PDSCH for one CSI-RS resource. The UE may obtain the set of hypothetical power offset values from a message from the gNB or based on pre-configurations.

At step 304, the UE initially selects or is assigned one power offset value between the CSI-RS and PDSCH for one CSI-RS resource, for which the UE measures CSI and reports it back to the gNB as a part of a CSI report. At step 306, the UE measures the signal quality or the estimated throughput of an existing link and existing power offset. At step 308, the UE determines whether the signal quality or throughput is greater than a threshold value. If the signal quality or throughput is greater than the threshold value, at step 310, the UE starts measurement of multiple CSI-RS resource configurations with different hypothetical power offsets between the CSI-RS and PDSCH and reports them to the gNB, in order for the gNB to reduce the transmit power. The process may then return to step 306 as the UE continues to monitor the signal quality or estimated throughput.

If the signal quality or throughput is not greater than the threshold value, at step 312, the UE keeps using the current power-offset value and legacy CSI framework. The process may then return to step 306 as the UE continues to monitor the signal quality or estimated throughput.

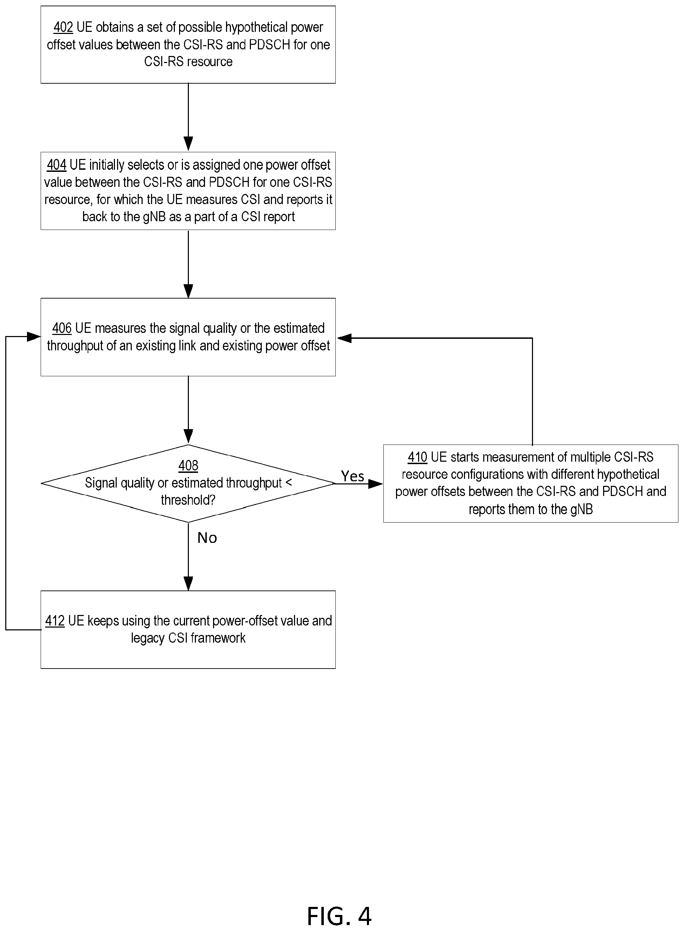

FIG. 4 depicts an example of a power adaption scheme for increasing signal quality according to some embodiments. At step 402, a UE obtains a set of possible hypothetical power offset values between the CSI-RS and PDSCH for one CSI-RS resource. The UE may obtain the set of hypothetical power offset values from a message from the gNB or based on pre-configurations.

At step 404, the UE initially selects or is assigned one power offset value between the CSI-RS and PDSCH for one CSI-RS resource, for which the UE measures CSI and reports it back to the gNB as a part of a CSI report. At step 406, the UE measures the signal quality or the estimated throughput of an existing link and existing power offset. At step 408, the UE determines whether the signal quality or throughput is lower than a threshold value. If the signal quality or throughput is lower than the threshold value, at step 410, the UE starts measurement of multiple CSI-RS resource configurations with different hypothetical power offsets between the CSI-RS and PDSCH and reports them to the gNB, in order for the gNB to increase the transmit power for improving the quality of the signal for a future transmission. The process may then return to step 406 as the UE continues to monitor the signal quality or estimated throughput.

If the signal quality or throughput is not lower than the threshold value, at step 412, the UE keeps using the current power-offset value and legacy CSI framework. The process may then return to step 406 as the UE continues to monitor the signal quality or estimated throughput.

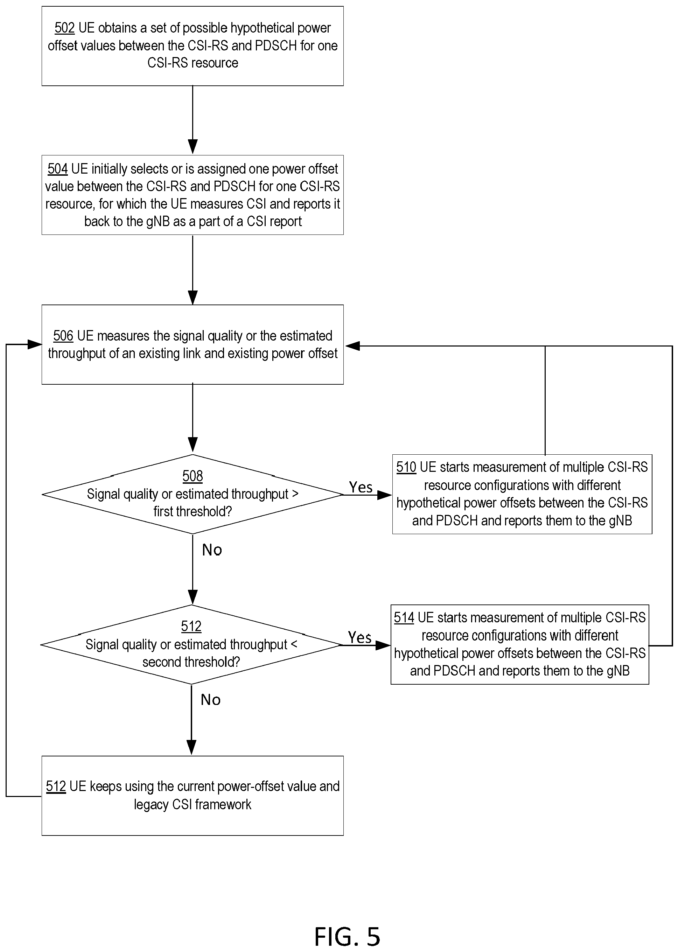

FIG. 5 depicts an example of a power adaption scheme for reducing transmission power and increasing signal quality according to some embodiments. At step 502, a UE obtains a set of possible hypothetical power offset values between the CSI-RS and PDSCH for one CSI-RS resource. The UE may obtain the set of hypothetical power offset values from a message from the gNB or based on pre-configurations.

At step 504, the UE initially selects or is assigned one power offset value between the CSI-RS and PDSCH for one CSI-RS resource, for which the UE measures CSI and reports it back to the gNB as a part of a CSI report. At step 506, the UE measures the signal quality or the estimated throughput of an existing link and existing power offset. At step 508, the UE determines whether the signal quality or throughput is greater than a first threshold value. If the signal quality or throughput is greater than the first threshold value, at step 510, the UE starts measurement of multiple CSI-RS resource configurations with different hypothetical power offsets between the CSI-RS and PDSCH and reports them to the gNB, in order for the gNB to decrease the transmit power. The process may then return to step 506 as the UE continues to monitor the signal quality or estimated throughput.

If the signal quality or throughput is not greater than the first threshold value, at step 512, the UE determines whether the signal quality or throughput is lower than a second threshold value. If the signal quality or throughput is lower than the second threshold value, at step 514, the UE starts measurement of multiple CSI-RS resource configurations with different hypothetical power offsets between the CSI-RS and PDSCH and reports them to the gNB, in order for the gNB to increase the transmit power for improving the quality of the signal for a future transmission. The process may then return to step 506 as the UE continues to monitor the signal quality or estimated throughput.

While step 512 is depicted as occurring after step 508, the order in which the UE makes the above determinations is interchangeable and other implementations may include the UE determining whether the signal quality or throughput is lower than the second threshold first or at the same time as the UE determining whether the signal quality or throughput is greater than the first threshold.

If the signal quality or throughput is neither greater than the first threshold value or lower than the second threshold value, at step 516, the UE keeps using the current power-offset value and legacy CSI framework. The process may then return to step 506 as the UE continues to monitor the signal quality or estimated throughput.

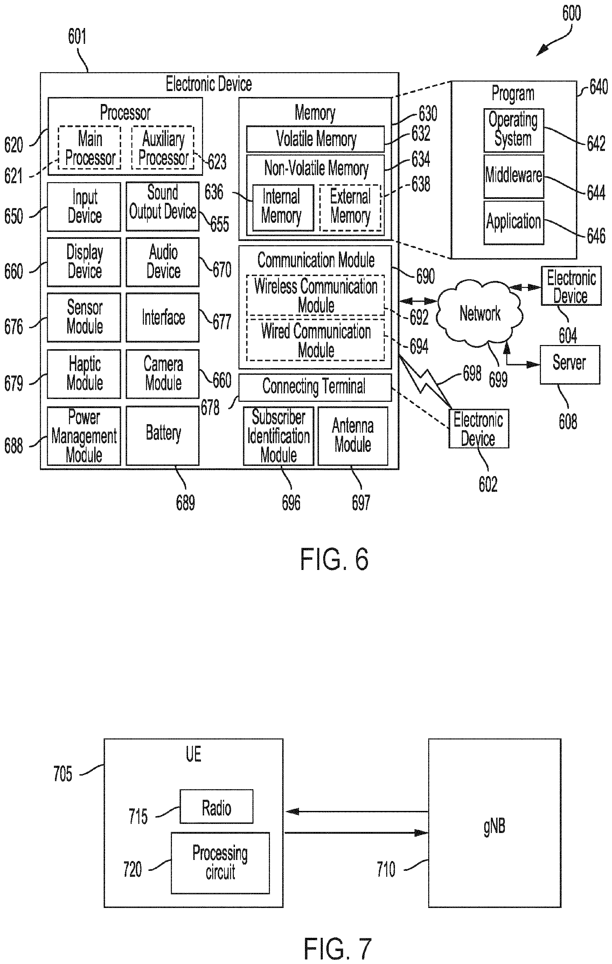

FIG. 6 is a block diagram of an electronic device in a network environment 600, according to an embodiment which may be used to perform any of the methods described herein. For example, electronic device 601 may be an example of UE 106 or 705.

Referring to FIG. 6, an electronic device 601 in a network environment 600 may communicate with an electronic device 602 via a first network 698 (e.g., a short-range wireless communication network), or an electronic device 604 or a server 608 via a second network 699 (e.g., a long-range wireless communication network). The electronic device 601 may communicate with the electronic device 604 via the server 608. The electronic device 601 may include a processor 620, a memory 630, an input device 650, a sound output device 655, a display device 660, an audio module 670, a sensor module 676, an interface 677, a haptic module 679, a camera module 680, a power management module 688, a battery 689, a communication module 690, a subscriber identification module (SIM) card 696, or an antenna module 697. In one embodiment, at least one (e.g., the display device 660 or the camera module 680) of the components may be omitted from the electronic device 601, or one or more other components may be added to the electronic device 601. Some of the components may be implemented as a single integrated circuit (IC). For example, the sensor module 676 (e.g., a fingerprint sensor, an iris sensor, or an illuminance sensor) may be embedded in the display device 660 (e.g., a display).

The processor 620 may execute software (e.g., a program 640) to control at least one other component (e.g., a hardware or a software component) of the electronic device 601 coupled with the processor 620 and may perform various data processing or computations.

As at least part of the data processing or computations, the processor 620 may load a command or data received from another component (e.g., the sensor module 676 or the communication module 690) in volatile memory 632, process the command or the data stored in the volatile memory 632, and store resulting data in non-volatile memory 634. The processor 620 may include a main processor 621 (e.g., a central processing unit (CPU) or an application processor (AP)), and an auxiliary processor 623 (e.g., a graphics processing unit (GPU), an image signal processor (ISP), a sensor hub processor, or a communication processor (CP)) that is operable independently from, or in conjunction with, the main processor 621. Additionally or alternatively, the auxiliary processor 623 may be adapted to consume less power than the main processor 621, or execute a particular function. The auxiliary processor 623 may be implemented as being separate from, or a part of, the main processor 621.

The auxiliary processor 623 may control at least some of the functions or states related to at least one component (e.g., the display device 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). The auxiliary processor 623 (e.g., an image signal processor or a communication processor) may be implemented as part of another component (e.g., the camera module 680 or the communication module 690) functionally related to the auxiliary processor 623.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634. Non-volatile memory 634 may include internal memory 636 and/or external memory 638.

The program 640 may be stored in the memory 630 as software, and may include, for example, an operating system (OS) 642, middleware 644, or an application 646.

The input device 650 may receive a command or data to be used by another component (e.g., the processor 620) of the electronic device 601, from the outside (e.g., a user) of the electronic device 601. The input device 650 may include, for example, a microphone, a mouse, or a keyboard.

The sound output device 655 may output sound signals to the outside of the electronic device 601. The sound output device 655 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 660 may visually provide information to the outside (e.g., a user) of the electronic device 601. The display device 660 may include, for example, a display, a hologram device, or a projector and control circuitry to control a corresponding one of the display, hologram device, and projector. The display device 660 may include touch circuitry adapted to detect a touch, or sensor circuitry (e.g., a pressure sensor) adapted to measure the intensity of force incurred by the touch.

The audio module 670 may convert a sound into an electrical signal and vice versa. The audio module 670 may obtain the sound via the input device 650 or output the sound via the sound output device 655 or a headphone of an external electronic device 602 directly (e.g., wired) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. The sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device 602 directly (e.g., wired) or wirelessly. The interface 677 may include, for example, a high- definition multimedia interface (HDMI), a universal serial bus (USB) interface, a secure digital (SD) card interface, or an audio interface.

A connecting terminal 678 may include a connector via which the electronic device 601 may be physically connected with the external electronic device 602. The connecting terminal 678 may include, for example, an HDMI connector, a USB connector, an SD card connector, or an audio connector (e.g., a headphone connector).

The haptic module 679 may convert an electrical signal into a mechanical stimulus (e.g., a vibration or a movement) or an electrical stimulus which may be recognized by a user via tactile sensation or kinesthetic sensation. The haptic module 679 may include, for example, a motor, a piezoelectric element, or an electrical stimulator.

The camera module 680 may capture a still image or moving images. The camera module 680 may include one or more lenses, image sensors, image signal processors, or flashes. The power management module 688 may manage power supplied to the electronic device 601. The power management module 688 may be implemented as at least part of, for example, a power management integrated circuit (PMIC).

The battery 689 may supply power to at least one component of the electronic device 601. The battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the AP) and supports a direct (e.g., wired) communication or a wireless communication. The communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BLUETOOTH^{™}, wireless-fidelity (Wi-Fi) direct, or a standard of the Infrared Data Association (IrDA)) or the second network 699 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The antenna module 697 may transmit or receive a signal or power to or from the outside (e.g., the external electronic device) of the electronic device 601. The antenna module 697 may include one or more antennas, and, therefrom, at least one antenna appropriate for a communication scheme used in the communication network, such as the first network 698 or the second network 699, may be selected, for example, by the communication module 690 (e.g., the wireless communication module 692). The signal or the power may then be transmitted or received between the communication module 690 and the external electronic device via the selected at least one antenna.

Commands or data may be transmitted or received between the electronic device 601 and the external electronic device 604 via the server 608 coupled with the second network 699. Each of the electronic devices 602 and 604 may be a device of a same type as, or a different type, from the electronic device 601. All or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 601. The electronic device 601 may provide the outcome, with or without further processing of the outcome, as at least part of a reply to the request. To that end, a cloud computing, distributed computing, or client-server computing technology may be used, for example.

FIG. 7 shows a system including a UE 705 and a gNB 710, in communication with each other. The UE may include a radio 715 and a processing circuit (or a means for processing) 720, which may perform various methods disclosed herein, e.g., the method illustrated in FIG. 1. For example, the processing circuit 720 may receive, via the radio 715, transmissions from the network node (gNB) 710, and the processing circuit 720 may transmit, via the radio 715, signals to the gNB 710.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
generating channel state information, CSI, measurements at a user equipment (100), UE, based on each of a plurality of power offsets;
transmitting the CSI measurements in a CSI report from the UE (100) to a base station, gNB, (150);
receiving, from the gNB (150), an indication of a channel state corresponding to a particular power offset of the plurality of power offsets; and
based on the indication of the channel state, using one or more particular resources to receive a physical data shared channel, PDSCH.

2. The method of claim 1, wherein the indication of the channel state is received in a message sent to a plurality of different UEs including the UE (100).

3. The method of claim 1 or 2, wherein the plurality of power offsets comprises power offsets between a CSI reference signal, CSI-RS, and PDSCH.

4. The method of any one of claims 1 to 3, wherein the plurality of power offsets comprises power offsets between a synchronization signal block, SSB, and a CSI reference signal, CSI-RS.

5. The method of claim 4, further comprising:
receiving, from the gNB (150), data indicating a change in an offset between the SSB and the CSI-RS; and
performing the generating CSI measurements in response to receiving the data from the gNB indicating the change in the offset between the SSB and the CSI-RS.

6. The method of any one of claims 1 to 4, further comprising:
receiving, at the UE (100), from the gNB (150), data identifying the plurality of power offsets; and
performing the generating CSI measurements in response to receiving the data identifying the plurality of power offsets;
wherein the data identifying the plurality of power offsets is received through a first downlink control information, DCI, message and the indication of the channel state corresponding to the particular power offset is received through a second DCI message.

7. The method of claim 6, wherein the UE (100) is pre-configured with the plurality of power offsets and the data identifying the plurality of power offsets comprises a selection of the plurality of power offsets.

8. The method of any one of claims 1 to 7, further comprising:
determining that one or more pre-configured conditions have been satisfied; and
performing the generating CSI measurements based on each of the plurality of power offsets in response to determining that the one or more pre-configured conditions have been satisfied.

9. The method of claim 8, wherein the one or more pre-configured conditions comprises a throughput based on an existing CSI-RS resource configuration with an existing power offset between CSI-RS and PDSCH falling below a threshold value.

10. The method of claim 8 or 9, wherein the one or more pre-configured conditions comprises an SINR falling below a threshold value.

11. The method of any one of claims 1 to 10, wherein the one or more particular resources used to receive the PDSCH comprises a frequency domain, a time domain, or a power domain physical resource scheduled by the gNB (150).

12. A system comprising:
one or more processors (620);
a memory (630) storing instructions which, when executed by the one or more processors (620), cause performance of the method according to any one of claims 1 to 11.
